(19) Europäisches Patentamt
European Patent Office
Office européen des brevets

(11) Veröffentlichungsnummer: **0 147 766**
**A2**

(12) # EUROPÄISCHE PATENTANMELDUNG

(21) Anmeldenummer: 84115666.4

(22) Anmeldetag: 18.12.84

(51) Int. Cl.[4]: C 08 G 69/32

(30) Priorität: 30.12.83 DE 3347580
05.01.84 DE 3400237

(43) Veröffentlichungstag der Anmeldung:
10.07.85 Patentblatt 85/28

(84) Benannte Vertragsstaaten:
DE FR GB IT NL

(71) Anmelder: BAYER AG
Konzernverwaltung RP Patentabteilung
D-5090 Leverkusen 1 Bayerwerk(DE)

(72) Erfinder: Heitz, Walter, Prof. Dr.
Am Schmidtborn 5
D-3575 Kirchhain(DE)

(72) Erfinder: Strohriegel, Peter
Hainweg 3
D-3553 Cölbe/Bürgeln(DE)

(54) **Verfahren zur Herstellung aromatischer Polyamide.**

(57) Gegenstand der vorliegenden Erfindung sind ein Verfahren zur Herstellung von aromatischen Polyamiden im Gemisch mit $SiO_2$, das dadurch gekennzeichnet ist, daß man Tere(Iso)phthalsäure mit aromatischen Diaminen in Anwesenheit von $SiCl_4$ und tertiären, aromatischen Stickstoffheterocyclen polykondensiert, die im Gemisch mit $SiO_2$ anfallenden Polyamide sowie ein Verfahren zu deren Isolierung.

EP 0 147 766 A2

BAYER AKTIENGESELLSCHAFT 5090 Leverkusen, Bayerwerk

Konzernverwaltung RP
Patentabteilung PS/by-c

# Verfahren zur Herstellung aromatischer Polyamide

Gegenstand der Erfindung ist ein Verfahren zur Herstellung von aromatischen Polyamiden mit wiederkehrenden Struktureinheiten der Formel I

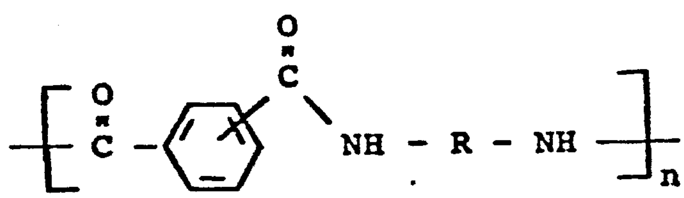 I,

worin

R 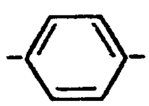, 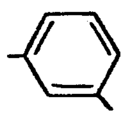 oder 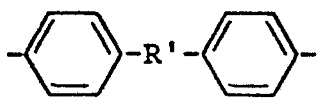 mit R' =

Einfachbindung, $-CH_2-$, -O-, 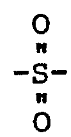 oder -S- ist,

und worin n 2 bis 200, vorzugsweise 5 bis 100 ist,

im Gemisch mit $SiO_2$, das dadurch gekennzeichnet ist, daß man Terephthalsäure und/oder Isophthalsäure mit etwa

äquimolaren Mengen Diaminen der Formel II

$$H_2N - R - NH_2 \qquad II,$$

worin

R die für die Formel I genannte Bedeutung hat,

in Anwesenheit von $SiCl_4$ und tertiären, aromatischen Stickstoffheterocyclen als Lösungsmittel bei Temperaturen von 60°C bis 200°C, vorzugsweise von 100°C bis 150°C, und Drücken von 1 bis 10 Atmosphären, vorzugsweise von 1 Atmosphäre polykondensiert, wobei pro Mol Dicarbonsäure 1 bis 2 Mol $SiCl_4$ eingesetzt wird. Das Verfahren bietet gegenüber bekannten Verfahren (siehe beispielsweise H.G. Elias in Ullmanns Encyclopädie der technischen Chemie, 4. Aufl. Band 11, S. 343) den Vorteil besonderer Einfachheit, da der Einsatz von Carbonsäurechloriden nicht nötig ist.

Bei der Reaktion entstehen Gemische aus Polyamiden und $SiO_2$, die direkt zu Gebrauchsgegenständen verarbeitet werden können. Durch Lösen der Polyamide in $H_2SO_4$ oder N-Methylpyrrolidon/LiCl und Filtration kann das $SiO_2$ abgetrennt werden. Aus diesen Lösungen können die Polyamide in reiner Form in bekannter Weise isoliert werden.

Geeignete tertiäre, aromatische Stickstoffheterocyclen mit wenigstens einem N-Atom im Ring, der 5- und 6-gliedrig und gegebenenfalls mit einem aromatischen Ring polykondensiert sein kann, sind beispielsweise Pyridin,

Picoline, Lutidine, Chinolin oder Isochinolin. Die Konzentration der Dicarbonsäure bzw. des Diamins im Stickstoffheterocyclus liegt zwischen etwa 0,1 und etwa 1 Mol/ pro Liter Stickstoffheterocyclus. Als Lösungsmittel können auch Gemische der genannten aromatischen Stickstoffbasen mit unter den Reaktionsbedingungen inerten anderen Lösungsmitteln wie beispielsweise Chlorbenzol oder Decan verwendet werden. Die Wahl der Temperatur kann in Abhängigkeit vom verwendeten Lösungsmittel erfolgen; bei Temperaturen über dem Siedepunkt des jeweils eingesetzten Lösungsmittels ist die Mitverwendung von Überdruck erforderlich. Bevorzugte Variationen sind Pyridin oder Pyridin-Chlorbenzol-Gemische, wobei ohne Überdruck beim Siedepunkt der jeweiligen Lösungen gearbeitet wird.

Die erfindungsgemäße Umsetzung kann durch die folgende Reaktionsgleichung dargestellt werden:

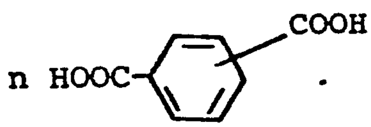 + n $H_2N - R - NH_2$ + n $SiCl_4$ →

III                II

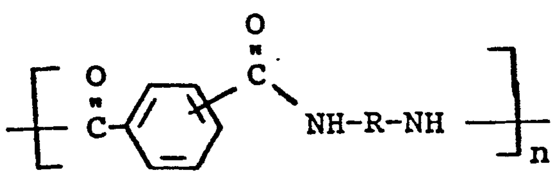 + n $SiO_2$ + 4n HCl

I

Die Regulierung der Molekulargewichte erfolgt im wesentlichen über das jeweils eingesetzte Molverhältnis Dicarbonsäure zu $SiCl_4$.

Die erzielten Molekulargewichte werden über die inhärenten Viskositäten ermittelt, welche bei 30°C an Lösungen von 0,5 g Polyamid in 100 ml konzentrierter Schwefelsäure gemessen wurden.

Die Abtrennung der erhaltenen Polyamide und der $SiO_2$ von dem Lösungsmittel bzw. Lösungsmittelgemisch kann in bekannter Weise erfolgen, beispielsweise durch Ansäuern und Abfiltrieren. Die gegebenenfalls erwünschte Abtrennung von $SiO_2$ ist bereits vorher beschrieben.

Die erfindungsgemäß erhaltenen Polyamide mit oder ohne $SiO_2$-Gehalt sind in bekannter Weise technisch brauchbar, beispielsweise sind sie zur Herstellung von Pulps geeignet.

Beispiel 1

Darstellung von Poly-(1.4-phenylenterephthalamid)

4.15 g Terephthalsäure, 2.70 g 1.4-Phenylendiamin und 90 ml Pyridin werden in einem ausgeheizten Dreihalskolben mit KPG Rührer, Rückflußkühler und Tropftrichter eingefüllt. Unter Eiskühlung tropft man 4.58 ml Siliciumtetrachlorid zu und erhitzt anschließend für 48 Stunden zum Rückfluß. Zur Aufarbeitung wird das Reaktionsgemisch in 800 ml 2N HCL eingerührt. Das Produkt wird abgesaugt und gründlich mit Wasser, Methanol und Aceton gewaschen. Nach dem Trocknen erhält man 8.22 g (98 %) eines Gemischs aus Poly-(1.4-phenylenterphthalamid) und Siliciumdioxid. Zur Abtrennung des Siliciumdioxids löst man das Produkt in 400 ml konz. Schwefelsäure und filtriert über eine Glasfritte. Das Polymere wird in Wasser ausgefällt, abgesaugt, gründlich mit heißem Wasser, Methanol und Aceton gewaschen und getrocknet.
Ausbeute: 5.48 g ≙ 92 %
inhärente Viskosität: 0.60 (gemessen wie vorstehend erläutert).

Beispiel 2

Darstellung von Poly-(1.3-phenylenisophthalamid)

3.32 g Isophthalsäure, 2.16 g 1.3-Phenylendiamin, 40 ml Chlorbenzol und 20 ml Pyridin werden in einen

ausgeheizten 100 ml Dreihalskolben mit KPG Rührer, Rückflußkühler und Tropftrichter eingefüllt. Unter Eiskühlung tropft man 2.86 ml Siliciumtetrachlorid zu und erhitzt anschließend für 48 Stunden zum Rückfluß. Zur Aufarbeitung wird das Reaktionsgemisch in ein Gemisch aus 300 ml 2N HCL und 300 ml Methanol eingerührt. Das Polymere wird abgesaugt und gründlich mit Wasser, Methanol und Aceton gewaschen.

Zur Abtrennung des Siliciumdioxids löst man das Produkt in 250 ml konz. Schwefelsäure und filtriert über eine Glasfritte. Das Polymere wird in Wasser ausgefällt, abgesaugt, gründlich mit heißem Wasser, Methanol und Aceton gewaschen und getrocknet.

Ausbeute: 4.68 g ≙ 98 %

inhärente Viskosität: 0.51.

Patentansprüche:

1. Verfahren zur Herstellung von aromatischen Polyamiden mit wiederkehrenden Einheiten der Formel I

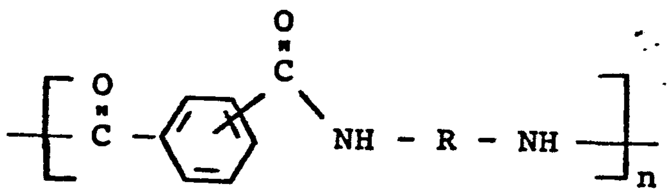 I,

worin

R 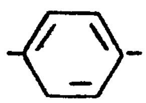, 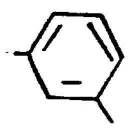 oder 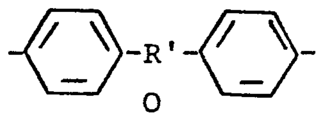 mit R' = Einfachbindung, $-CH_2-$, -O-, $-\overset{\overset{O}{\|}}{\underset{\underset{O}{\|}}{S}}-$ oder -S- ist,

und worin n 2 bis 200 ist, im Gemisch mit $SiO_2$,

dadurch gekennzeichnet, daß man Terephthalsäure und/oder Isophthalsäure mit etwa äquimolaren Mengen Diaminen der Formel II

$$H_2N - R - NH_2 \qquad II,$$

worin

R die für die Formel I genannte Bedeutung hat,

in Anwesenheit von $SiCl_4$ und tertiären, aromatischen Stickstoffheterocyclen als Lösungsmittel bei Temperaturen von 60°C bis 200°C und Drücken von 1 bis 10 Atmosphären polykondensiert, wobei pro Mol Dicarbonsäure 1 bis 2 Mol $SiCl_4$ eingesetzt wird, umsetzt.

2. Verfahren gemäß Anspruch 1, dadurch gekennzeichnet, daß als Lösungsmittel Gemische der Stickstoffheterocyclen mit unter den Reaktionsbedingungen inerten anderen Lösungsmitteln verwendet werden.

3. Verfahren gemäß Ansprüchen 1 und 2, dadurch gekennzeichnet, daß als Lösungsmittel Pyridin oder Pyridin-Chlorbenzol-Gemische verwendet werden.

4. Aromatische Polyamide im Gemisch mit $SiO_2$ erhältlich gemäß den Verfahren der Ansprüche 1 bis 3.

5. Verfahren zur Isolierung von Polyamiden mit wiederkehrenden Einheiten der Formel I gemäß Anspruch 1, aus dem Gemisch mit $SiO_2$, dadurch gekennzeichnet, daß man aus dem Gemisch die Polyamide in $H_2SO_4$ oder N-Methylpyrrolidon/LiCl löst, durch Filtration vom $SiO_2$ abtrennt und anschließend in bekannter Weise isoliert.